# EUROPEAN PATENT SPECIFICATION

(11) **EP 2 648 903 B1**
(45) Date of publication and mention of the grant of the patent: **19.10.2016**
(21) Application number: 11794587.3
(22) Date of filing: 21.11.2011
(51) Int. Cl.: B32B 5/26, B32B 27/32, B32B 27/34, F41H 5/04

(54) **BALLISTIC RESISTANT COMPOSITE FABRIC**
KUGELSICHERER WIDERSTANDSFÄHIGER VERBUNDSTOFF
TISSU BALISTIQUE COMPOSITE RÉSISTANT

(30) Priority: 09.12.2010 US 964268
(43) Date of publication of application: 16.10.2013
(73) Proprietor: W. L. Gore & Associates, Inc., Newark, DE 19711 (US)
(72) Inventor: CLOUGH, Norman, Landenberg PA 19350 (US)
(74) Representative: Klunker . Schmitt-Nilson . Hirsch
(86) International application number: PCT/US2011/061661
(87) International publication number: WO 2012/078348

(56) References cited:
- EP-A1- 1 574 811
- WO-A2-2006/086338
- US-A- 5 471 906
- US-A1- 2010 192 758

## Description

### RELATED APPLICATIONS

This application is a continuation-in-part of pending US Patent Application Serial Number 11/557,319 filed November 7, 2006, which is in turn a divisional application of US Patent Application Serial Number 11/056,074 filed February 11,2005,abandoned.

### FIELD OF THE INVENTION

The present invention relates to a fluoropolymer composite fabric and, more particularly, to ballistic resistant composite fabric including high strength fibers and fluoropolymer fibers such as expanded polytetrafluoroethylene (PTFE).

### DEFINITION OF TERMS

As used in this application, the term "fiber" means a continuous (as opposed to staple) threadlike article, including monofilament and multifilament constructions. "High strength fiber" as used herein means a fiber having a tenacity of greater than 15g/d. "Ballistic resistance fabric" as used herein means a fabric having a V₅₀ of greater than about 1420 ft/s (433 m/s), according to testing procedures described herein below. "Room temperature" is defined as 22 degrees C +/- 3 degrees C.

### BACKGROUND OF THE INVENTION

High-strength fibers are used in many applications. For example, polymeric ropes are widely used in mooring and heavy lifting applications, including, for instance, oceanographic, marine, and offshore drilling applications. They are subjected to high tensile and bending stresses in use as well as a wide range of environmental challenges. These ropes are constructed in a variety of ways from various fiber types. For example, the ropes may be braided ropes, wire-lay ropes, or parallel strand ropes. Braided ropes are formed by braiding or plaiting bundle groups together as opposed to twisting them together. Wire-lay ropes are made in a similar manner as wire ropes, where each layer of twisted bundles is generally wound (laid) in the same direction about the center axis. Parallel strand ropes are an assemblage of bundle groups held together by a braided or extruded jacket.

Component fibers in ropes used in mooring and heavy lifting applications include high modulus and high strength fibers such as ultra high molecular weight polyethylene (UHMWPE) fibers. DYNEEMA® and SPECTRA® brand fibers are examples of such fibers. Liquid crystal polymer (LCP) fibers such as liquid crystal aromatic polyester sold under the tradename VECTRAN® are also used to construct such ropes. Para-aramid fibers, such as Kevlar® fiber, likewise, also have utility in such applications.

The service life of these ropes is compromised by one or more of three mechanisms. Fiber abrasion is one of the mechanisms. This abrasion could be fiber-to-fiber abrasion internally or external abrasion of the fibers against another object. The abrasion damages the fibers, thereby decreasing the life of the rope. LCP fibers are particularly susceptible to this failure mechanism. A second mechanism is another consequence of abrasion. As rope fibers abrade each other during use, such as when the rope is bent under tension against a pulley or drum, heat is generated. This internal heat severely weakens the fibers. The fibers are seen to exhibit accelerated elongation rates or to break (i.e., creep rupture) under load. The UHMWPE fibers suffer from this mode of failure. Another mechanism is a consequence of compression of the rope or parts of the rope where the rope is pulled taught over a pulley, drum, or other object.

Various solutions to address these problems have been explored. These attempts typically involve fiber material changes or construction changes. The use of new and stronger fibers is often examined as a way to improve rope life. One solution involves the utilization of multiple types of fibers in new configurations. That is, two or more types of fibers are combined to create a rope. The different type fibers can be combined in a specific manner so as to compensate for the shortcoming of each fiber type. An example of where a combination of two or more fibers can provide property benefits are improved resistance to creep and creep rupture (unlike a 100% UHMWPE rope) and improved resistance to self-abrasion (unlike a 100% LCP rope). All such ropes, however, still perform inadequately in some applications, failing due to one or more of the three above-mentioned mechanisms.

Rope performance is determined to a large extent by the design of the most fundamental building block used to construct the rope, the bundle of fibers. This bundle may include different types of fibers. Improving bundle life generally improves the life of the rope. The bundles have value in applications less demanding than the heavy-duty ropes described above. Such applications include lifting, bundling, securing, and the like. Attempts have been made to combine fiber materials in such repeated stress applications. For example, UHMWPE fibers and high strength fibers, such as LCP fibers, have been blended to create a large diameter rope with better abrasion resistance, but they are still not as effective as desired.

The abrasion resistance of ropes for elevators has been improved by utilizing high modulus synthetic fibers, impregnating one or more of the bundles with polytetrafluoroethylene (PTFE) dispersion, or coating the fibers with PTFE powder. Typically such coatings wear off relatively quickly. Providing a jacket to the exterior of a rope or the individual bundles has also been shown to improve the rope life. Jackets add weight, bulk, and stiffness to the rope, however.

Fiberglass and PTFE have been commingled in order to extend the life of fiberglass fibers. These fibers have been woven into fabrics. The resultant articles possess superior flex life and abrasion resistance compared to fiberglass fibers alone. Heat-meltable fluorine-containing resins have been combined with fibers, in particular with cotton-like material fibers. The resultant fiber has been used to create improved fabrics. PTFE fibers have been used in combination with other fibers in dental floss and other low-load applications, but not in repeated stress applications described herein.

Another application for high strength fibers is in ballistic resistant fabrics. Such fabrics are used, for instance, in bulletproof vests. Typical high strength fibers for these applications include para-aramid and UHMWPE. Although the fabrics made from these high strength fibers alone have suitable ballistic resistance, they are stiff and therefore uncomfortable to wear. These fabrics also suffer from low breathability. A ballistic resistant fabric with decreased stiffness and/or improved breathability is very desirable, and yet no satisfactory such fabric has yet been developed.

In sum, none of the known attempts to improve the life of ropes or cables have provided sufficient durability in applications involving both bending and high tension. Nor has a suitably comfortable ballistic resistant fabric heretofore been available. Furthermore, no suitably comfortable and durable ballistic resistant fabric heretofore has been available.

The invention is directed to an article according to claim 1 and to a method of improving the handleability of a ballistic resistant fabric according to claim 15. Embodiments are disclosed in the dependent claims.

WO 2006/086338 describes a rope comprising a plurality of bundle groups. Each of the bundle groups has a periphery and comprises a plurality of high strength fibers. At least one low coefficient of friction fiber, which may be expanded PTFE, is disposed around at least a portion of the periphery of at least one of the bundle groups. The addition of the low coefficient of friction fiber around the periphery of a bundle group of a rope significantly increases rope life. Although primarily presented in the exemplary embodiment of a rope for use in repeated stress applications, the disclosed composite bundles are also presented as having applicability in other forms; for example, in belts, nets, slings, cables, woven fabrics, nonwoven fabrics, and tubular textiles.

US 2010/192758 describes a fishing line having multiple UHMWPE fibers and at least one fluoropolymer fiber comprising expanded PTFE.

### SUMMARY OF THE INVENTION

The present invention provides a ballistic resistant article comprising high strength fibers and expanded PTFE fibers, wherein the article is a fabric further exhibiting a V₅₀ similar to existing ballistic materials having about the same weight and having a lower bending moment at room temperature.

In another embodiment, the present invention provides a ballistic resistant article comprising para-aramid fibers and expanded PTFE fibers, wherein the article is a fabric further exhibiting a V₅₀ of greater than about 1420 ft/s (433 m/s) at a fabric weight of about 0.75 Ib/ft² (3.7 kg/sq m) and a bending moment at room temperature of less than 0.006 Ib-in (0.0007 N-m).

In another embodiment, the present invention provides a ballistic resistant article comprising UHMWPE fibers and expanded PTFE fibers, wherein the article is a fabric further exhibiting a V₅₀ of greater than about 735 ft/s (224 m/s) at a fabric weight of about 0.75 Ib/ft² (3.7 kg/sq m) and a bending moment at room temperature of less than 0.006 Ib-in (0.0007 N-m).

In another embodiment, the high strength fibers are UHMWPE and the fabric has a durability of about 5,000,000 cycles.

In another embodiment, the high strength fibers are para-aramid and the fabric has a durability of greater than about 100,000 cycle, preferably greater than about 170,000 cycles, still more preferably greater than about 300,000 cycles, and most preferably greater than about 350,000 cycles. Also preferably, the fabric has a Frazier number of at least 3, and preferably 20, 30, and 60, most preferably. The expanded PTFE is at least 5% of the weight, and preferably at least 10 percent of the weight of the fabric.

In another aspect, the invention provides an article comprising a plurality of layers of fabric, at least one of the layers comprising high strength fibers and expanded PTFE fibers, wherein the article is a ballistic resistant fabric.

In another aspect,, the invention provides a method of improving the handleability of a ballistic resistant fabric comprising the step of incorporating into the fabric at least one fiber of expanded PTFE to produce a bending moment of the fabric of less than 0.0008 N-m.

### BRIEF DESCRIPTION OF THE DRAWINGS

Fig. 1 is a top view of a simple weave pattern for a ballistic resistant fabric according to an exemplary embodiment of the present invention.
Fig. 2 is a top view of a multilayer, unidirectional, non-woven pattern for a ballistic resistant fabric according to an exemplary embodiment of the present invention.
Fig. 3 is a schematic of a bending moment test apparatus.

### DETAILED DESCRIPTION OF THE INVENTION

The inventors have discovered that a relatively small weight percent of a fluoropolymer fiber added to a bundle of high strength fibers produces a surprisingly dramatic increase in abrasion resistance and wear life.

The high-strength fibers used to form ropes, cables, and other tensile members for use in repeated stress applications include ultra high molecular weight polyethylene (UHMWPE) such as DYNEEMA® and SPECTRA® brand fibers, liquid crystal polymer (LCP) fibers such as those sold under the tradename VECTRAN®, other LCAPs, PBO, high performance aramid fibers, para-aramid fibers such as Kevlar® fiber, carbon fiber, nylon, and steel. Combinations of such fibers are also included, such as UHMWPE and LCP, which is typically used for ropes in oceanographic and other heavy lifting applications.

The fluoropolymer fibers used in combination with any of the above fibers according to preferred embodiments of the present invention include, but are not limited to, polytetrafluoroethylene (PTFE) (including expanded PTFE (ePTFE) and modified PTFE), fluorinated ethylenepropylene (FEP), ethylene-chlorotrifluoroethylene (ECTFE), ethylene-tetrafluoroethylene (ETFE), or perfluoroalkoxy polymer (PFA). The fluoropolymer fibers include monofilament fibers, multifilament fibers, or both. Both high and low density fluoropolymer fibers may be used in this invention.

Although the fluoropolymer fiber typically has less strength than the high-strength fiber, the overall strength of the combined bundle is not significantly compromised by the addition of the fluoropolymer fiber or fibers (or replacement of the high strength fibers with the fluoropolymer fiber or fibers). Preferably, less than 10% strength reduction is observed after inclusion of the fluoropolymer fibers.

The fluoropolymer fibers are preferably combined with the high-strength fibers in an amount such that less than about 40% by weight of fluoropolymer fiber are present in the composite bundle. More preferable ranges include less than about 35%, less than about 30%, less than about 25%, less than about 20%, less than about 15%, less than about 10%, less than about 5%, and about 1%.

Surprisingly, even at these low addition levels, and with only a moderate (less than about 10%) reduction in strength, the composite bundles of the present invention show a dramatic increase in abrasion resistance and thus in wear life. The abrasion rates, therefore, are lower for PTFE fiber-containing composite bundles than for the same constructions devoid of PTFE fibers.

The fluoropolymer fibers optionally include fillers. Solid lubricants such as graphite, waxes, or even fluid lubricants like hydrocarbon oils or silicone oils may be used. Such fillers impart additional favorable properties to the fluoropolymer fibers and ultimately to the rope itself. For example, PTFE filled with carbon has improved thermal conductivity and is useful to improve the heat resistance of the fiber and rope. This prevents or at least retards the build-up of heat in the rope, which is one of the contributing factors to rope failure. Graphite or other lubricious fillers may be used to enhance the lubrication benefits realized by adding the fluoropolymer fibers.

Any conventionally known method may be used to combine the fluoropolymer fibers with the high-strength fibers. No special processing is required. The fibers may be blended, twisted, braided, or simply co-processed together with no special combination processing. Typically the fibers are combined using conventional rope manufacturing processes known to those skilled in the art.

Although heretofore discussed in conjunction with an exemplary embodiment of a rope for use in repeated stress applications, the invention also has applicability in other forms; for example, in belts, nets, slings, cables, woven fabrics, nonwoven fabrics, and tubular textiles. In a preferred embodiment of the present invention, high strength fibers are combined with fluoropolymer fibers such as expanded PTFE into a fabric that is both ballistic resistant and less stiff than conventional ballistic resistant fabrics. The stiffness of the inventive vest is measured using a handleability test. Preferably, the inventive fabric has a bending moment at room temperature of less than 0.0007 N-m. Ballistic resistance is measured using a V₅₀ test. Those skilled in the art are familiar with V₅₀ tests as described in MIL-STD-662F. Preferred fabrics of this invention have a V₅₀ similar to a fabric made of the high strength fiber alone at a fabric weight of about 0.75 pounds per square foot (3.7 kg/sq m) and having a lower bending moment for each individual layer. Preferred fabrics of this invention also exhibit enhanced comfort due to improved breathability as evidenced by higher Frazier Numbers. Frazier Number of the fabric is preferably at least 10, more preferably at least 20, as described below. The resulting fabric offers a more comfortable ballistic fabric possessing the same degree of ballistic protection.

The percentage of the expanded PTFE fibers incorporated into the inventive ballistic resistant vest may vary. A preferred range is about 5-25% by weight of expanded PTFE fibers to total fabric weight. More preferred is about 10-20% by weight of expanded PTFE fibers. For example, a most preferred ballistic resistant fabric of the invention comprises 1 expanded PTFE fiber for every 3 to 5 high strength fibers (for fibers of similar denier). Alternatively, the ratio of fibers can be 1:1 should the denier of the expanded PTFE fibers be 1/6 that of the high strength fiber Also alternatively, twice as many expanded PTFE fibers can be used if they are half the denier of the high strength fiber. Lower percentage incorporation of expanded PTFE fibers comes at the expense of poorer handleability; and too high a percent composition compromises ballistic performance (V₅₀). In alternative embodiments, other fluoropolymer fibers such as PVDF are used.

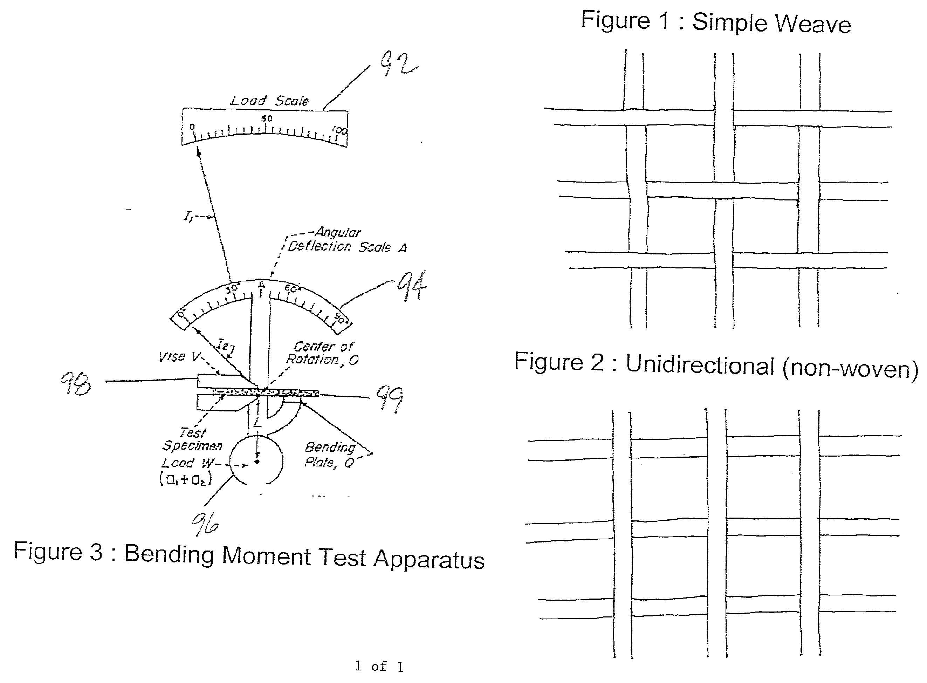

Preferably, the high strength fiber is UHMWPE, para-aramid, PBO [poly(p-phenylene benzobisoxazole)] or any suitable high tensile strength, high modulus materials (fibers with tenacities at least 15 g/d). The ballistic resistant fabric itself can be simple weaves, as depicted in Fig. 1, or multilayer unidirectional (non-woven) laminates, as depicted in Fig. 2. In one alternative embodiment, a Kevlar-based fabric has a V₅₀ performance of greater than about 410 m/s at a fabric weight of about 3.3 kg/sq m, flex endurance of at least about 300,000 cycles, Frazier Number of about 60 and bending moment of less than about 0.0004 N-m. In another alternative embodiment, a Kevlar-based fabric has a V₅₀ performance of greater than about 408 m/s at a fabric weight of about 3.7 kg/sq m, flex endurance of at least about 350,000 cycles, a Frazier Number of about 19, and bending moment of less than about 0.0005 N-m. In another alternative embodiment, a Kevlar-based fabric has a V₅₀ performance of greater than about 442 m/s at a fabric weight of about 3.6 kg/sq m, flex endurance of at least about 170,000 cycles, a Frazier Number of about 27, and bending moment of less than about 0.0005 N-m. In another alternative embodiment, a Spectra-based fabric has a V₅₀ performance of greater than about 224 m/s at a fabric weight of about 3.7 kg/sq m, flex endurance of at least about 5,000,000 cycles, a Frazier Number of about 28, and a bending moment of less than about 0.0007 N-m. The expanded PTFE fibers can be either multifilament or monofilament. Multifilament is preferred for the resultant improved flexibility wherein multiple lower denier ePTFE fibers are preferred over fewer, higher denier ePTFE fibers.

The expanded PTFE fibers are incorporated with the high strength fibers within individual layers of fabric. Many layers of such fabric may be stacked upon one another, or in combination with layers of other construction, to form a ballistic resistant vest or garment.

For the Kevlar plus ePTFE embodiments, both tear strength and elongation at peak load were significantly higher than the comparative Kevlar only article. For the Spectra plus ePTFE embodiments, the elongation at peak load was significantly higher than the comparative Spectra only article. In both the Kevlar plus ePTFE and the Spectra plus ePTFE embodiments, the tear mechanism was different than the comparative articles.

### EXAMPLES

In the examples presented below, various samples and comparative samples were prepared and tested according to the described test methods. The examples are intended to illustrate the invention, but not to limit it. Rather, the inventors intend for their invention to be given the full scope of the appended claims.

### Testing Methods

### V₅₀ Test

A 15 inch (38.1 cm) by 18 inch (45.7 cm) panel was constructed using multiple plies of the woven fabric material to achieve an areal density (i.e., mass per unit area) for the panel of about 0.75 Ib/sq ft (3.7 kg/sq m). Each panel had a 1 inch (2.54 cm) perimeter stitch and an x-stitch through the diagonals of the panel served to hold the layers together. Panels were tested to measure V₅₀, the velocity of a bullet corresponding to the 50% probability that a bullet will completely pass through the panel. The tests were performed as follows. Each panel was placed inside a 70d black nylon pouch. The pouch was then fixed to a backing material consisting of 4 in (10.2 cm) of Roma Plastina clay that had been pre-heated to 37 deg C for at least 24 hours. The test was conducted at a room temperature of 24 deg C and 70% humidity, using 9 mm Remington 124 grain, full metal jacket bullets which had been stored at ambient temperature. The bullet velocity was determined using Oehler time counters positioned at 1.52 meters and 3.05 meters from the front of the panel. The velocity of the bullet striking the panel was calculated at a distance of 2.29 meters from the panel. The panel was shot a minimum of 9 times with a minimum shot spacing of 3 inch (7.6 cm). The values for V₅₀, high partial and low complete were reported. To determine the V₅₀ value, the velocities associated with an equal number of complete and partial penetrations were averaged. A complete penetration is one in which the bullet completely penetrates through the fabric and a partial penetration is one in which the bullet is stopped within the ballistic fabric. All of the velocities used to determine V₅₀ must fall within a range of 125 ft/sec (38 m/sec) of each other. When it is necessary to choose between velocities, the highest partial penetrations and lowest complete penetrations that fall within the 125 ft/sec (38 m/sec) tolerance are used in the calculation. The V₅₀ is then calculated from the average of these shot velocities. Preferably, the calculation is based on at least 3 "partial" shots and 3 "complete" penetrations. The V₅₀ test results for each of the examples are shown in Table 1.

**Table 1**

| Comparative Example A Kevlar | | Example 1 Kevlar + PTFE | | Example 2 Kevlar + PTFE | | Example 3 Kevlar + PTFE | | Comparative Example B Spectra | | Example 4 Spectra + PTFE | |
|---|---|---|---|---|---|---|---|---|---|---|---|
| Areal Density = 0.75 lb/sq ft (3.664 kg/sq m) | | Areal Density = 0.68 lb/sq ft (3.322 kg/sq m) | | Areal Density = 0.75 1b/sq ft (3.664 kg/sq m) | | Areal Density = 0.74 lb/sq ft (3.615 kg/sq m) | | Areal Density = 0.77 lb/sq ft (3.763 kg/sq m) | | Areal Density = 0.76 lb/sq ft (3.714 kg/sq m) | |
| Average Shot Velocity (m/sec) | Partial or Complete | Average Shot Velocity (m/sec) | Partial or Complete | Average Shot Velocity (m/sec) | Partial or Complete | Average Shot Velocity (m/sec) | Partial or Complete | Average Shot Velocity (m/sec) | Partial or Complete | Average Shot Velocity (m/sec) | Partial or Complete |
| 451 | Complete | 407 | Complete | 395 | Partial | 460 | Partial | 238 | Partial | 231 | Complete |
| 417 | Partial | 405 | Partial | 419 | Complete | 464 | Complete | 234 | Partial | 215 | Partial |
| 444 | Complete | 404 | Complete | 402 | Partial | 440 | Complete | 245 | Complete | 222 | Complete |
| 430 | Partial | 395 | Partial | 415 | Complete | 426 | Partial | 232 | Complete | 227 | Partial |
| 427 | Partial | 405 | Partial | 409 | Complete | 434 | Partial | | | | |
| 442 | Complete | 417 | Partial | 407 | Partial | 450 | Complete | | | | |
| 434 | Partial | 429 | Complete | | | 436 | Complete | | | | |
| 442 | Complete | 419 | Complete | | | 427 | Partial | | | | |
| V50 = 436 m/sec (4+4) | | V50 = 410 m/sec (4+4) | | V50 = 408 m/sec (3 + 3) | | V50 = 442 m/sec (4 + 4) | | V50 = 237 m/sec (2+2) | | V50 = 224 m/sec (2+2) | |

### Handleability Test

Handleability of the fabrics was tested by deriving the apparent bending moment of a material by measuring force and angle of bend of a cantilever beam. The apparatus for the apparent bending moment test is shown in Figure 3 and is a testing machine of Tinius Olsen Testing machine Co.

Apparent bending Moment = Total Pendulum Weight x (Percent of Load Scale Reading) / 100.

The upper load scale 92 represents the percent of load scale reading from 0-100%. The lower scale 94 represents the angular deflection of the vise from 0-90 degrees which can be controlled using both a hand crank and motor assembly. The total pendulum weight is determined from the sum of the pendulum weight and the additional applied weights 96.

Ensuring that the apparatus is level, the apparatus is calibrated using a 0.004 inch (0.102mm) thickness feeler strip of known bending moment. Each fabric sample is cut into 1 inch (25.4mm) x 2 inch (50.8mm) sample (test specimen 99) with the longer length representing the warp or weft direction of the fabric. The sample is carefully inserted into the vise 98 and firmly clamped, ensuring that the fabric is not bent and in good condition. A pre-load of 1% (determined on the upper load scale) is applied to the sample by rotating the vise using a hand crank until the sample contacts the bending plate and the load pointer reads 1% on the load scale. With the 1% pre-load applied, the angle pointer is set on the lower angular deflection scale to 0 degrees by gently moving the pointer by hand. The angular deflection of the vise is increased by engaging the motor by pushing down on the motor engaging lever. The lever is held down to ensure a constant rate of motion. Once the angular deflection scale reaches 60 degrees the lever is released and the percent load value on the upper load scale is noted. If the upper load scale reading is greater than 100%, additional pendulum weights are required and the sample retested.

The testing of the inventive and comparative fabric samples described below all required a total pendulum weight of 0.025 lbs (11.4 g) which included the base pendulum weight of 0.005 lbs (2.3 g). The 1% preload was then subtracted from the actual upper load scale reading at 60 degrees deflection and the apparent bending moment was calculated from this percent load scale reading and the total pendulum weight. The bending moment for each sample was determined in the warp and the weft direction. Bending moment values were reported in units of N-m. The tests were performed at room temperature.

### Folding Endurance Test

Durability of the fabrics was determined using a M.I.T Folding Endurance Tester (Tinius Olsen Testing Machine Co. in Willow Grove, PA, USA). Fabric samples of 1.27 cm width and 10 cm length are cut such that the length of the sample is in the warp (machine) direction. The sample is placed in the M.I.T tester and clamped to give a final sample size between clamps of 5cm. During the testing, the tester double folds the fabric over a straightedge (designated a "03" bend angle) with a tension weight of 1987 g in either direction over a 270 degree range. A cycle is one complete stroke which includes forward and return movements. Testing is conducted until the sample breaks into two separate pieces under the applied tension. The number of cycles to failure is noted for each sample. The reported cycles to failure values represent the average of 2 measurements.

### Tear Strength Test

Tear strength was measured in the following manner. Samples were cut to 10.16 cm long in the warp direction of the fabric by 2.54 cm wide in the weft direction of the fabric. A 5.08cm long slit was made in the center of each sample in the warp direction, which was parallel to the length direction, thereby cutting the sample in half for the given cut length. In this way, two 5.08 cm long and 1.27 cm wide flaps were created. 1.91 cm of each flap was secured in the grips of a tensile testing machine (Instron Model 5567 fitted with 5.08 cm wide hydraulic clamps) with the grips positioned at a distance of 5.08 cm apart. To ensure a constant tear angle, care was taken to ensure that one flap was positioned as close to the edge of the clamp as possible and the other flap positioned as close at possible to the edge of the adjacent clamp. Using a crosshead speed of 25.4 cm/min (10 in/min), the sample was torn at the slit. The test was conducted until failure occurred. Each sample was visually examined to assess the failure mode. Tear strength (i.e., peak force) values, in units of kg, were reported and the results represented the average of two measurements. Elongation at peak load values, in units of cm, were also reported and were based on the average of two measurements.

### Air Permeability Test

Air Permeability (Frazier) for each fabric was determined using a Textest, FX3310 air permeability tester, made by Textest AG (Schwerzenbach, Switzerland) with the pressure set to 1.27 cm water pressure. The sample was placed, free from tension, onto the test head and automatically clamped prior to testing. The diameter of the sample under test was fixed at 70mm. The measuring range was chosen in accordance with the manufacturer's instructions. A new sample test area was used for each test. Results are reported in terms of Frazier Number which is air flow in cubic feet/minute/square foot of sample at 1.2 cm water pressure. The reported values represent the average of two measurements.

### Comparative Example A - KEVLAR

A non-twisted 600d Kevlar fiber (Part Number X300 1F1618, E.I. DuPont de Nemours, Inc., Wilmington, Delaware) was obtained. A simple weave having 29 pics/inch (11.4 pics/cm) and 29 ends/inch (11.4 ends/cm) was created. A 15 inch (38.1 cm) by 18 inch (45.7 cm) panel was then constructed using 21 plies of the simple weave material in the following manner. A 1 in (2.54 cm) perimeter stitch and an x-stitch through the diagonals of the panel served to hold the layers together. The areal density (i.e., the mass per unit area) of the panel was 0.75 lb/sq ft (3.664 kg/sq meter).

The V₅₀ test results follow. The panel was shot a total of 9 times with a minimum shot spacing of 3 inch (7.6 cm). The average bullet velocity ranged from 1368 to 1479 ft/sec (417-451 m/sec). The V₅₀ was calculated to be 1430 ft/sec (436 m/sec) from shot velocities of 4 "partial" and 4 "completes," with a high partial of 1425 ft/sec (434 m/sec) and low complete of 1451 ft/sec (442 m/sec).

The bending moments in the warp and weft directions were 7.63 x 10⁻⁴ N-m and 7.63 x 10⁻⁴ N-m respectively. The number of cycles to failure in the flex endurance test was 87,508 cycles. The Frazier Number of the fabric was 2.75. The tear strength and elongation at peak load were 2.27 kg and 6.60 cm, respectively. The fibers that were pulled out from the samples during the test all originated from one side of the samples.

### Example 1 - KEVLAR plus ePTFE

A non-twisted 600d Kevlar fiber (Part Number X300 1F1618, E.I. DuPont de Nemours, Inc., Wilmington, Delaware) and 400d multifilament ePTFE fiber (Part Number V112939, W.L. Gore & Associates, Inc., Elkton, MD) were obtained. The ePTFE fiber was twisted at 4 twists/inch (157 twists/m) in a Z configuration. A simple weave having 29 pics/inch (11.4 pics/cm) and 29 ends/inch (11.4 ends/cm) was created using one ePTFE fiber for every 3 Kevlar fibers. The resulting weave, therefore, consisted of about 18% PTFE by weight.

A 15 inch (38.1 cm) by 18 inch (45.7 cm) panel was then constructed using 23 plies of the simple weave material in the following manner. A 1 in (2.54 cm) perimeter stitch and an x-stitch through the diagonals of the panel served to hold the layers together. The choice of 23 plies was based on achieving a value of areal density (i.e., the mass per unit area) of the panel of close to 0.75 lb/sq ft (3.664 kg/sq meter). The actual value was 0.68 lb/sq ft (3.322kg/sq meter).

The V₅₀ test results follow. The panel was shot a total of 11 times with a minimum shot spacing of 3 inch (7.6 cm). The average bullet velocity ranged from 1193 to 1514 ft/sec (364-461 m/sec). The V₅₀ was calculated to be 1345 ft/sec (410 m/sec) from shot velocities of 4 "partial" and 4 "completes," with a high partial of 1369 ft/sec (417 m/sec) and low complete of 1325 ft/sec (404 m/sec). The panel of this example was subjectively assessed to be softer and more flexible than that of Comparative Example A. Furthermore, the panel of this example maintained its structural integrity throughout the V₅₀ test and did not unravel like the panel of Comparative Example A.

The bending moments in the warp and weft directions were 3.96 x 10⁻⁴ N-m and 3.67 x 10⁻⁴ N-m, respectively. The number of cycles to failure in the flex endurance test was 303,787 cycles. The Frazier Number of the fabric was 60.4. The tear strength and elongation at peak load were 3.42 kg and 9.12 cm, respectively. The fibers that were pulled out from the samples during the test originated from both sides of the samples. That is, the failure involved the entire samples, not one side of them.

### Example 2 - KEVLAR plus ePTFE

A non-twisted 600d Kevlar fiber (Part Number X300 1F1618, E.I. DuPont de Nemours, Inc., Wilmington, Delaware) and 500d monofilament ePTFE fiber (Part Number 10328808, W.L. Gore & Associates, Inc., Elkton, MD) were obtained. A simple weave having 29 pics/inch (11.4 pics/cm) and 29 ends/inch (11.4 ends/cm) was created using one ePTFE fiber for every 3 Kevlar fibers. The resulting weave, therefore, consisted of about 22% PTFE by weight.

A 15 inch (38.1 cm) by 18 inch (45.7 cm) panel was then constructed using 23 plies of the simple weave material in the following manner. A 1 in (2.54 cm) perimeter stitch and an x-stitch through the diagonals of the panel served to hold the layers together. The areal density (i.e., the mass per unit area) of the panel was 0.75 lb/sq ft (3.664kg/sq meter).

The V₅₀ test results follow. The panel was shot a total of 9 times with a minimum shot spacing of 3 inch (7.6 cm). The average bullet velocity ranged from 1286 ft/sec (392m/sec) to 1496 ft/sec (456m/sec). The V₅₀ was calculated to be 1338 ft/sec (408m/sec) from shot velocities of 3 "partial" and 3 "completes,", with a high partial of 1335 ft/sec (407m/sec) and low complete of 1343ft/sec (409m/sec). The panel of this example was subjectively assessed to be softer and more flexible than that of Comparative Example A. Furthermore, the panel of this example maintained its structural integrity throughout the test and did not unravel like the panel of Comparative Example A.

The bending moments in the warp and weft directions were 3.45 x 10⁻⁴ N-m and 4.58 x 10⁻⁴ N-m, respectively. The number of cycles to failure in the flex endurance test was 349,980 cycles. The Frazier Number of the fabric was 18.75. The tear strength and elongation at peak load were 3.80 kg and 9.47 cm, respectively. The fibers that were pulled out from the samples during the test originated from both sides of the samples. That is, the failure involved the entire samples, not just one side of them.

### Example 3 - KEVLAR plus ePTFE

A non-twisted 600d Kevlar fiber (Part Number X300 1F1618, E.I. DuPont de Nemours, Inc., Wilmington, Delaware) and 400d multifilament ePTFE fiber (Part Number V112939, W.L. Gore & Associates, Inc., Elkton, MD) were obtained. The ePTFE fiber was twisted at 4 twists/inch (157 twists/m) in a Z configuration. A simple weave having 29 pics/inch (11.4 pics/cm) and 29 ends/inch (11.4 ends/cm) was created using one ePTFE fiber for every 5 Kevlar fibers. The resulting weave, therefore, consisted of about 12% PTFE by weight.

A 15 inch (38.1 cm) by 18 inch (45.7 cm) panel was then constructed using 23 plies of the simple weave material in the following manner. A 1 in (2.54 cm) perimeter stitch and an x-stitch through the diagonals of the panel served to hold the layers together. The areal density (i.e., the mass per unit area) of the panel was 0.74 lb/sq ft (3.615kg/ sq meter).

The V₅₀ test results follow. The panel was shot a total of 9 times with a minimum shot spacing of 3 inch (7.6 cm). The average bullet velocity ranged from 1397 ft/sec (426m/sec) to 1580 ft/sec (482m/sec). The V₅₀ was calculated to be 1450 ft/sec (442m/sec)) from shot velocities of 4 "partial" and 4 "completes," with a high partial of 1509 ft/sec (460m/sec) and low complete of 1431 ft/sec (436m/sec). The panel of this example was subjectively assessed to be softer and more flexible than that of Comparative Example A. Furthermore, the panel of this example maintained its structural integrity throughout the test and did not unravel like the panel of Comparative Example A.

The bending moments in the warp and weft directions were 5.25 x 10⁻⁴ N-m and 4.75 x 10⁻⁴ N-m, respectively. The number of cycles to failure in the flex endurance test was 169,067 cycles. The Frazier Number of the fabric was 27.5. The tear strength and elongation at peak load were 4.05 kg and 9.60 cm, respectively. The fibers that were pulled out from the samples during the test originated from both sides of the samples. That is, the failure involved the entire samples, not just one side of them.

### Comparative Example B - SPECTRA

A 650d Spectra fiber (Spectra 900, Honeywell International Inc. Morristown, New Jersey) twisted at 2 twists/inch (79 twists/m) in a Z configuration was obtained. A simple weave having 32 pics/inch (12.6 pics/cm) and 32 ends/inch (12.6 ends/cm) was created.

A 15 inch (38.1 cm) by 18 inch (45.7 cm) panel was then constructed using 18 plies of the simple weave material in the following manner. A 1 in (2.54 cm) perimeter stitch and an x-stitch through the diagonals of the panel served to hold the layers together. The areal density (i.e., the mass per unit area) of the panel was 0.77 lb/sq ft (3.763 kg/ sq meter).

The V₅₀ test results follow. The panel was shot a total of 9 times with a minimum shot spacing of 3 inch (7.6 cm). The average bullet velocity ranged from 760 ft/sec (232m/sec) to 1506 ft/sec (459m/sec). The V₅₀ was calculated to be 778 ft/sec (237m/sec) from shot velocities of 2 "partial" and 2 "completes," with a high partial of 780 ft/sec (238m/sec) and low complete of 760 ft/sec (232m/sec).

The bending moments in the warp and weft directions were 6.78 x 10⁻⁴ N-m and 12.43 x 10⁻⁴ N-m, respectively. The Frazier Number of the fabric was 6.1. The tear strength and elongation at peak load were 10.53 kg and 7.31 cm, respectively. The fibers that were pulled out from the samples during the test all originated from one side of the samples.

### Example 4 - SPECTRA plus ePTFE

A 650d Spectra (Spectra 900, Honeywell International Inc. Morristown, New Jersey) twisted at 2 twists/inch (79 twists/m) in a Z configuration and 400d multifilament ePTFE fiber (Part Number V112939, W.L. Gore & Associates, Inc., Elkton, MD) twisted at 4 twists/inch (157 twists/m) in a Z configuration were obtained. A simple weave having 32 pics/inch (12.6 pics/cm) and 32 ends/inch (12.6 ends/cm) was created using one ePTFE fiber for every 3 Spectra fibers. The resulting weave, therefore, consisted of about 17% PTFE by weight.

A 15 inch (38.1 cm) by 18 inch (45.7 cm) panel was then constructed using 20 plies of the simple weave material in the following manner. A 1 in (2.54 cm) perimeter stitch and an x-stitch through the diagonals of the panel served to hold the layers together. The areal density (i.e., the mass per unit area) of the panel was 0.76 lb/sq ft (3.714 kg/ sq meter).

The V₅₀ test results follow. The panel was shot a total of 9 times with a minimum shot spacing of 3 inch (7.6 cm). The average bullet velocity ranged from 459 ft/sec (140m/sec) to 1515 ft/sec (462m/sec). The V₅₀ was calculated to be 735 ft/sec (224m/sec) from shot velocities of 2 "partial" and 2 "completes," with a high partial of 746 ft/sec (227m/sec) and low complete of 729 ft/sec (222m/sec). The panel of this example was subjectively assessed to be softer and more flexible than that of Comparative Example B.

The bending moments in the warp and weft directions were 4,80 x 10⁻⁴ N-m and 6.78 x 10⁻⁴ N-m, respectively. The number of cycles to failure in a single flex endurance test was 5,578,587 cycles. The Frazier Number of the fabric was 28.4. The tear strength and elongation at peak load were 9.23 kg and 9.86 cm, respectively. The fibers that were pulled out from the samples during the test originated from both sides of the samples. That is, the failure involved the entire samples, not just one side of them.

## Claims

1. An article comprising a plurality of layers of fabric, at least one of said layers comprising high strength fibers and expanded PTFE fibers, at least 5 percent of the weight of the fibers being comprised of the expanded PTFE fibers, wherein said article is a ballistic resistant fabric.

2. An article as defined in claim 1 wherein said high strength fibers are para-aramid fibers and said ballistic resistant fabric has a V₅₀ of greater than about 433 m/s and a bending moment at room temperature of less than 0.0008 N-m, or wherein said fabric further comprises a UHMWPE fabric and a V₅₀ of greater than about 224 m/s and a bending moment at room temperature of less than 0.0007 N-m.

3. An article as defined in claim 1 wherein said V₅₀ is at a fabric weight of about 3.7 kg/sq m.

4. An article as defined in claim 1 wherein at least 10 percent of the weight of the fibers is comprised of ePTFE fibers.

5. An article as defined in claim 1 wherein said high strength fibers comprise UHMWPE fibers and said fabric has a durability of about 5,000,000 cycles.

6. An article as defined in claim 1 wherein said high strength fibers comprise para-aramid fibers and said fabric has a durability of greater than about 100,000 cycles, a durability of about 170,000 cycles or greater a durability of about 300,000 cycles or greater, or a durability of about 350,000 cycles or greater.

7. An article as defined in claim 1 wherein said fabric has a Frazier Number of at least 3, at least 20, at least 30, or at least 60.

8. An article as defined in claim 1, wherein the expanded PTFE fibers are incorporated with the high strength fibers within individual layers of fabric.

9. An article as claimed in claim 8, wherein multiple layers of such fabric are stacked upon one another to form a ballistic resistant vest or garment.

10. An article as claimed in claim 8, wherein such layers of fabric are provided in combination with layers of other construction to form a ballistic resistant vest or garment.

11. An article as claimed in claim 1, wherein the ballistic resistant fabric comprises 1 expanded PTFE fiber for every 3 to 5 high strength fibers, for fibers of similar denier, or wherein the ballistic resistant fabric comprises 2 expanded PTFE fibers for every 3 to 5 high strength fibers, where the expanded PTFE fibers are half the denier of the high strength fibers, or
wherein the ballistic resistant fabric comprises 1 expanded PTFE fibre for every 1 high strength fiber, where the denier of the expanded PTFE fibers is 1/6 that of the high strength fibers.

12. An article as claimed in claim 1, wherein the ballistic resistant fabric is simple weaves.

13. An article as claimed in claim 1, wherein the ballistic resistant fabric is multilayer unidirectional non-woven laminates.

14. An article as claimed in claim 1, wherein the expanded PTFE fibers are multifilament, or wherein the expanded PTFE fibers are monofilament.

15. A method of improving the handleability of a ballistic resistant fabric comprising the step of incorporating into said fabric fibers of expanded PTFE to produce a bending moment of said fabric of less than 0.0008 N-m, the fabric comprising high strength fibers and expanded PTFE fibers wherein at least 5 percent of the weight of the fibers being comprised of the expanded PTFE fibers.

## Patentansprüche

1. Gegenstand, der eine Mehrzahl von Textilmateriallagen aufweist, wobei mindestens eine der Lagen hochfeste Fasern und expandierte PTFE-Fasern aufweist, wobei mindestens 5 Prozent des Gewichts der Fasern aus den expandierten PTFE-Fasern bestehen und wobei der Gegenstand ein ballis-tisch widerstandsfähiges Textilmaterial ist.

2. Gegenstand nach Anspruch 1,
wobei die hochfesten Fasern para-Aramid-Fasern sind und das ballistisch widerstandsfähige Textilmaterial einen V₅₀ von größer als etwa 433 m/s und ein Biegemoment bei Raumtemperatur von weniger als 0,0008 N-m aufweist, oder wobei das Textilmaterial ferner ein UHMWPE-Textilmaterial und einen V₅₀ von größer als etwa 224 m/s und ein Biegemoment bei Raumtemperatur von weniger als 0,0007 N-m aufweist.

3. Gegenstand nach Anspruch 1,
wobei der V₅₀ bei einem Textilmaterialgewicht von etwa 3,7 kg/m² vorliegt.

4. Gegenstand nach Anspruch 1,
wobei mindestens 10 Prozent des Gewichts der Fasern aus ePTFE-Fasern bestehen.

5. Gegenstand nach Anspruch 1,
wobei die hochfesten Fasern UHMWPE-Fasern aufweisen und das Textilmaterial eine Haltbarkeit von etwa 5.000.000 Zyklen aufweist.

6. Gegenstand nach Anspruch 1,
wobei die hochfesten Fasern para-Aramid-Fasern aufweisen und das Textilmaterial eine Haltbarkeit von mehr als etwa 100.000 Zyklen, eine Haltbarkeit von etwa 170.000 Zyklen oder mehr, eine Haltbarkeit von etwa 300.000 Zyklen oder mehr oder eine Haltbarkeit von etwa 350.000 Zyklen oder mehr aufweist.

7. Gegenstand nach Anspruch 1,
wobei das Textilmaterial eine Frazier-Zahl von mindestens 3, mindestens 20, mindestens 30 oder mindestens 60 aufweist.

8. Gegenstand nach Anspruch 1,
wobei die expandierten PTFE-Fasern in integrierter Weise mit den hochfesten Fasern innerhalb einzelner Textilmateriallagen vorgesehen sind.

9. Gegenstand nach Anspruch 8,
wobei mehrere Lagen von solchem Textilmaterial aufeinander gestapelt sind, um eine ballistisch widerstandsfähige Weste oder ein ballistisch widerstandsfähiges Kleidungsstück zu bilden.

10. Gegenstand nach Anspruch 8,
wobei derartige Textilmateriallagen in Kombination mit Lagen anderer Konstruktion vorhanden sind, um eine ballistisch widerstandsfähige Weste oder ein ballistisch widerstandsfähiges Kleidungsstück zu bilden.

11. Gegenstand nach Anspruch 1,
wobei das ballistisch widerstandsfähige Textilmaterial 1 expandierte PTFE-Faser pro 3 bis 5 hochfeste Fasern für Fasern mit ähnlichem Denier-Wert aufweist, oder
wobei das ballistisch widerstandsfähige Textilmaterial 2 expandierte PTFE-Fasern pro 3 bis 5 hochfeste Fasern aufweist, wenn die expandierten PTFE-Fasern den halben Denier-Wert der hochfesten Fasern aufweisen, oder
wobei das ballistisch widerstandsfähige Textilmaterial 1 expandierte PTFE-Faser pro 1 hochfeste Faser aufweist, wenn der Denier-Wert der expandierten PTFE-Fasern 1/6 des Denier-Werts der hochfesten Fasern beträgt.

12. Gegenstand nach Anspruch 1,
wobei das ballistisch widerstandsfähige Textilmaterial in einfachen Bindungen vorliegt.

13. Gegenstand nach Anspruch 1,
wobei das ballistisch widerstandsfähige Textilmaterial in Form von mehrlagigen, unidirektionalen Vlies-Laminaten vorliegt.

14. Gegenstand nach Anspruch 1,
wobei es sich bei den expandierten PTFE-Fasern um Multifilamente handelt, oder wobei es sich bei den expandierten PTFE-Fasern um Monofilamente handelt.

15. Verfahren zum Verbessern der Handhabbarkeit eines ballistisch widerstandsfähigen Textilmaterials, das den Schritt des Einbaus von Fasern aus expandiertem PTFE in das Textilmaterial beinhaltet, um ein Biegemoment des Textilmaterials von weniger als 0,0008 N-m zu erzeugen, wobei das Textilmaterial hochfeste Fasern und expandierte PTFE-Fasern aufweist, wobei mindestens 5 Prozent des Gewichts der Fasern aus den expandierten PTFE-Fasern bestehen.

## Revendications

1. Article comprenant une pluralité de couches de tissu, au moins l'une desdites couches comprenant des fibres présentant une résistance mécanique élevée et des fibres en polytétrafluoroéthylène (PTFE) expansé, au moins 5 % du poids des fibres étant constitués par les fibres en PTFE expansé, dans lequel ledit article est un tissu balistique résistant.

2. Article comme défini selon la revendication 1, dans lequel lesdites fibres présentant une résistance mécanique élevée sont des fibres en para-aramide et ledit tissu balistique résistant présente un V₅₀ supérieur à environ 433 m/s et un moment de flexion à température ambiante inférieur à 0,0008 N-m, ou dans lequel ledit tissu comprend en outre un tissu en polyéthylène de poids moléculaire ultra-élevé (UHMWPE) et présente un V₅₀ supérieur à environ 224 m/s et un moment de flexion à température ambiante inférieur à 0,0007 N-m.

3. Article comme défini selon la revendication 1, dans lequel ledit V₅₀ est pour un poids de tissu d'environ 3,7 kg/m².

4. Article comme défini selon la revendication 1, dans lequel au moins 10 % du poids des fibres sont constitués par des fibres en polytétrafluoroéthylène expansé (ePTFE).

5. Article comme défini selon la revendication 1, dans lequel lesdites fibres présentant une résistance mécanique élevée comprennent des fibres en UHMWPE et ledit tissu présente une durabilité d'environ 5 000 000 de cycles.

6. Article comme défini selon la revendication 1, dans lequel lesdites fibres présentant une résistance mécanique élevée comprennent des fibres en para-aramide et ledit tissu présente une durabilité supérieure à environ 100 000 cycles, une durabilité d'environ 170 000 cycles ou plus, une durabilité d'environ 300 000 cycles ou plus ou une durabilité d'environ 350 000 cycles ou plus.

7. Article comme défini selon la revendication 1, dans lequel ledit tissu présente un nombre de Frazier d'au moins 3, d'au moins 20, d'au moins 30 ou d'au moins 60.

8. Article comme défini selon la revendication 1, dans lequel les fibres en PTFE expansé sont incorporées avec les fibres présentant une résistance mécanique élevée à l'intérieur de couches individuelles de tissu.

9. Article comme défini selon la revendication 8, dans lequel de multiples couches de ce tissu sont empilées les unes au-dessus des autres de manière à former un gilet ou un vêtement balistique résistant.

10. Article comme défini selon la revendication 8, dans lequel ces couches de tissu sont prévues en combinaison avec des couches d'une autre construction de manière à former un gilet ou un vêtement balistique résistant.

11. Article comme défini selon la revendication 1, dans lequel :
le tissu balistique résistant comprend 1 fibre en PTFE expansé toutes les 3 à 5 fibres présentant une résistance mécanique élevée, pour des fibres de deniers similaires, ou dans lequel le tissu balistique résistant comprend 2 fibres en PTFE expansé toutes les 3 à 5 fibres présentant une résistance mécanique élevée, où les fibres en PTFE expansé présentent un denier égal à la moitié de celui des fibres présentant une résistance mécanique élevée, ou dans lequel :
le tissu balistique résistant comprend 1 fibre en PTFE expansé pour 1 fibre présentant une résistance mécanique élevée, où le denier des fibres en PTFE expansé est égal à 1/6-ème de celui des fibres présentant une résistance mécanique élevée.

12. Article comme défini selon la revendication 1, dans lequel le tissu balistique résistant est constitué par des tissages simples.

13. Article comme défini selon la revendication 1, dans lequel le tissu balistique résistant est constitué par un stratifié de multiples couches non tissées unidirectionnelles.

14. Article comme défini selon la revendication 1, dans lequel les fibres en PTFE expansé sont à multiples filaments, ou dans lequel les fibres en PTFE expansé sont à un seul filament.

15. Procédé pour améliorer la maniabilité d'un tissu balistique résistant comprenant l'étape consistant à incorporer dans ledit tissu des fibres en PTFE expansé de manière à produire un moment de flexion dudit tissu inférieur à 0,0008 N-m, le tissu comprenant des fibres présentant une résistance mécanique élevée et des fibres en PTFE expansé, dans lequel au moins 5 % du poids des fibres sont constitués par les fibres en PTFE expansé.
